# EUROPEAN PATENT APPLICATION

(11) **EP 3 578 060 A1**
(43) Date of publication of application: **11.12.2019**
(21) Application number: 18176672.6
(22) Date of filing: 08.06.2018
(51) Int. Cl.: A23L 15/00

(54) **EGG BASED FOODSTUFF AND PROCESS FOR MANUFACTURING AN EGG BASED FOODSTUFF**

(71) Applicant: Nortura SA, 0513 Oslo (NO)
(72) Inventor: Lagarhus, Thomas, N-3175 RAMNES (NO); Røstevang, Pål, N-1470 LØRENSKOG (NO); Hasle, Andersen, Juliane, N-3216 SANDEFJORD (NO); Lomnes, Hallgeir, N-1262 OSLO (NO)
(74) Representative: Onsagers AS

(57) **Abstract**

The present invention relates to a process for preparing an egg based food stuff and products prepared by said method.

## Description

### Fields of the invention

The present invention relates to a process for manufacturing an egg based foodstuff and the foodstuff manufactured by said process. Furthermore, the present invention relates to an egg based foodstuff.

### Background of the invention

Eggs are nutrient providing high-quality proteins, several vitamins and minerals, and meet a variety of nutrient needs in human in all stages of life. Eggs, especially eggs derived from chicken, constitute therefore an important part of a healthy diet for many people. A variety of methods for preparing eggs are known. For example, eggs may be boiled, scrambled, fried, baked, or poached.

One challenge is that eggs when they are cooked cannot be stored for extended periods of time while maintaining the organoleptic properties of freshly cooked eggs. The egg white consists primarily of water (about 90 % of the white is water) and a traditional cooked egg product such as scramble eggs or omelet will leak water during storage. Further, undesirable discoloring can arise, especially if pieces of meat have been added to an egg based product.

As of today, methods of keeping the water entrapped within cooked egg products by adding starch, dietary fibers and gums are known.

WO 2014 124101 describes an egg based mixture comprising primarily whole egg, which can be used immediately to prepare an egg based product or may be refrigerated and/or frozen for later use. In order to obtain a desirable texture of said mixture and less water release upon thawing and reheating, vegetable fibers and gums are included. A similar egg based product is disclosed in US 2015 282515 comprising whole eggs, fibers, gums, and starch.

CA 2500125 discloses a cooked egg product that exhibits freeze and thaw stability and which can be cut into dices. The egg product comprises liquid whole egg and modified waxy maize cook up starch functioning as a water-absorbent thickener, and vegetable gum. Further, pieces of supplemental food such as bacon, ham, and/or cheese is added to the product.

Even though, egg based foodstuff capable of being stored without leaking water is known from the prior art, there is still a need for further egg based foodstuff, and in particular ready-to-eat foodstuff primarily consisting of eggs with a long keeping quality and with excellent sliceability.

### Summary of the invention

The present inventors have solved this need by designing a unique manufacturing process resulting in an egg based foodstuff.

The present invention provides in a **first aspect** a process for manufacturing an egg based foodstuff comprising the following steps:
a. providing liquid eggs; and
b. thickening the liquid eggs by adding at least:
   i. at least one cold active thickening agent; and
   ii. at least one heat activated thickening agent,
   thereby obtaining a thickened liquid egg mass; and
c. optionally, resting the thickened liquid egg mass obtained in step b); and
d. optionally, filling the thickened liquid egg mass of step b) or c) in suitable molds; and
e. heat treating the liquid egg mass of step b), c) or d) to a core temperature of minimum 68 °C, thereby obtaining a heat treated egg based foodstuff; and
f. optionally, cooling the heat treated egg based foodstuff; and
g. optionally, slicing the heat treated egg based foodstuff of step f).

In one embodiment, the following are further added in step b):
i. at least one moisture retaining agent; and
ii. optimally, at least one stabilizing agent.

In one embodiment, the cold active thickening agent is a cold swelling starch.

In one embodiment, the heat activated thickening agent is a sulfated polysaccharide.

In one embodiment, the moisture retaining agent is a dietary fiber.

In one embodiment, at least one non-egg food flavoring is added in or after step b).

In one embodiment, the liquid eggs of step a) are consisting primarily of liquid whole eggs.

In one embodiment, the liquid eggs of step a) are consisting primarily of liquid egg whites.

The present invention provides in a **second aspect,** an egg based foodstuff manufactured by the above process.

The present invention provides in a **third aspect,** a foodstuff comprising at least 60 wt% egg and at least the following additives:
iii. at least one cold active thickening agent; and
iv. at least one heat activated thickening agent; and
v. at least one moisture retaining agent; and
vi. optionally, at least one stabilizing agent.

In one embodiment, the cold active thickening agent is a cold swelling starch.

In one embodiment, the heat activated thickening agent is a sulfated polysaccharide. In one embodiment, the sulfated polysaccharide is a carrageenan.

In one embodiment, the moisture retaining agent is a dietary fiber. In one embodiment, the dietary fiber is a vegetable fiber.

In one embodiment, the stabilizing agent, if present, is a dietary gum.

In one embodiment, the amounts of the additives given by percentage by weight of the foodstuff are approx. 1 - 10 wt% of the cold active thickening agent, and approx. 0.1 - 7 wt% of the heat activated thickening agent, and approx. 0.1 - 10 wt% of the moisture retaining agent, and if present, approx. 0.1 - 5 wt% of the stabilizing agent.

In one embodiment, the foodstuff further comprises at least one non-egg food flavoring.

In one embodiment, the foodstuff primarily is consisting of egg white and egg yolk in natural proportions.

In one embodiment, the foodstuff primarily is consisting of egg whites.

### Brief description of the drawings

**Figure 1****.** Viscosity versus shear rate for all the measurements of example 4. The top group of curves are for the masses primarily comprising liquid whole eggs, the bottom group of curves is for the masses primarily comprising liquid egg whites.
**Figure 2****.** Hysteresis loop showing week thixotropic behavior for sample "mass A1".
**Figure 3****.** Box plot showing viscosity results for the different liquid egg masses.

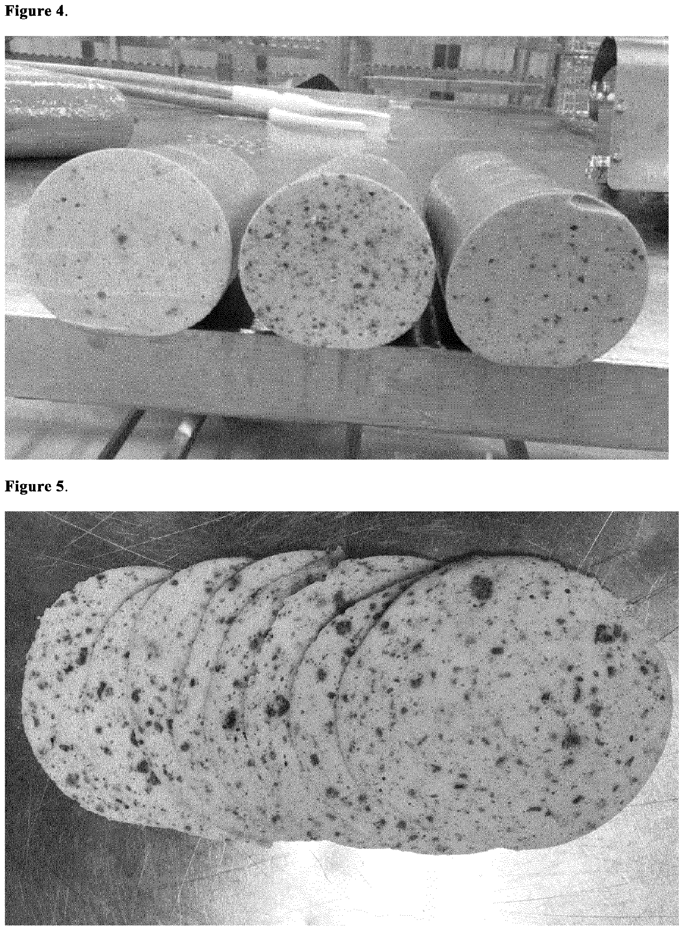

**Figure 4****.** The heat treated egg based foodstuff in three variants comprising different non-egg food flavoring. All three primarily consisting of egg white and egg yolk in natural proportions. The left variant comprising bacon, the middle salami, and the right one being vegetable (comprising tomato and jalapeño).
**Figure 5****.** Cold cuts of the in figure 4 shown egg based foodstuff. The slices have a thickness of about 1 mm and a diameter of about 90 mm.

### Detailed description of the invention

Unless specifically defined herein, all technical and scientific terms used have the same meaning as commonly understood by a skilled artisan in the field of food technology.

All methods and materials similar or equivalent to those described herein can be used in the practice or testing of the present invention, with suitable methods and materials being described herein. All publications, patent applications, patents, and other references mentioned herein are incorporated by reference in their entirety. In case of conflict, the present specification, including definitions, will prevail.

Where a numeric limit or range is stated, the endpoints are included. Also, all values and subs ranges within a numerical limit or range are specifically included as if explicitly written out.

Eggs represents as mentioned above a nutrient that meet a variety of nutrient needs in human, thus constitute an important part of a healthy diet. A variety of methods of preparing eggs is known. However, when an egg is cooked, it is problematic to store even for a few days without losing the organoleptic properties of a freshly cooked egg. The egg white consists of about 90 % water and it is a challenge to prevent the leak of water from cooked eggs during storage. Further, stored cooked egg products often loses its natural color and become discolored.

Addition of starch, dietary fibers and gums are known method for keeping the water entrapped within egg products and hinder leakage. However, the known egg based products do not constitute ready-to-eat products primarily consisting of eggs having the advantageous quality of being sliceable and which can be stored without losing its organoleptic properties, losing water or get smelly.

The present inventors have solved this need by designing a unique manufacturing process resulting in an egg based foodstuff. Said manufacturing process includes a thickening step before cooking of the eggs and the present inventors have designed a unique mixture of additives including a cold active thickening agent and a heat activated thickening agent that is added in the thickening step of said manufacturing process. The manufacturing process, the mixture of additive, and the egg based foodstuff produced by said process are described in further details below.

The term "liquid whole egg" as used herein means the naturally occurring combination of liquid egg white and liquid egg yolk present in an egg. In natural proportions, it typically ranges between about 23 and 25 % egg solids (W.J. Stadelman and O.J. Cotterill, 1995, Egg Science and Technology, Fourth Edition, Food Product Press Inc., page 257).

As used herein, "liquid egg" is to be understood as the edible portions of the egg, i.e. the liquid whole egg, the liquid egg yolk, the liquid egg white or any combination of any of these in any proportions thereof. Egg powder made of any of the edible portions of the egg and added water is also to be understood as "liquid egg".

Liquid eggs used as the starting material in the present invention can be obtained by breaking shelled eggs by hand or mechanically by use of cracking machines known in the art. Typically, shell eggs, once broken, are separated into whites and yolks, and filtered to remove undesired particles such as crushed shells, chalaza, shell membranes, and vitelline membranes. The pore size of the filter membrane used in such filtration is typically 1 mm. Alternatively, the liquid eggs can be obtained from egg powder that have been added water. The liquid eggs used as starting material is optionally standardized to a preferred solids content by adding yolk (upregulates the solids content) or by adding white (downregulates the solids content), e.g. to a solid content of about 23 %. To ensure safety, the liquid eggs are pasteurized to destroy *Salmonella* and other bacteria by standard method known in the art (see e.g. W.J. Stadelman and O.J. Cotterill, 1995, Egg Science and Technology, Fourth Edition, Food Product Press Inc., pages 296-304). E.g. liquid whole eggs (which include both yolk and white), yolk, and white are pasteurized separately and handled by the following procedures prior to further processing:
- Liquid whole egg:: pasteurized at 65 °C for 3 minutes,
cooled to a temperature below 4 °C, and
kept refrigerated at a temperature between 0 - 4 °C, and
deep-freeze at minus 18 °C

- Yolk:: pasteurized at 65 °C for 3 minutes,
cooling to a temperature below 4 °C,
optionally, salt (e.g. sodium chloride) is added to increase the storage time of the yolks and affect the flavor and color of the yolk
refrigerated to a temperature between 0 - 4 °C, and
deep-freeze at minus 18 °C
- Egg white:: pasteurized at 55 °C for 3 minutes,
cooling to a temperature below 4 °C, and
kept refrigerated at a temperature between 0 - 4°C, or
deep-freeze at minus 18 °C

The liquid eggs used as starting material in the present invention may be natural or salt may be added before or immediately after pasteurization.

Depending on the desired characteristics of the end product, the proportions of yolk to white can be adjusted. The proportion can be set to reflect the proportion in natural liquid whole eggs or it can be adjusted in the favor of either yolk or white. If for example a more yellow and nutrient dense ending product is required, more yolk is added. On the other hand, a product free of yolk and thus free of for example cholesterol but being high in protein can also be manufactured. If so, the starting liquid eggs consist primarily of liquid egg whites.

A **first aspect** of the present invention relates to the process of manufacturing the egg bases foodstuff starting from liquid eggs.

Preferably, the starting temperature of the liquid eggs is below 25 °C, such as below 12 °C. More preferably the starting temperature is below 8 °C, most preferably below 4 °C.

The liquid eggs are initially thickened. One possibility is to coagulate the liquid eggs by e.g. heating in which denatured proteins aggregate. However, a preferred method of the present invention is to thicken the liquid eggs by gelation that also includes aggregation of proteins that have not been denatured.

The terms "thickening" and "gelation" are used interchangeable herein.

In the process of the present invention the initial thickening or gelation is obtained in a thickening step in which a mixture of additives including a cold active thickening agent and a heat activated thickening agent is added and by mechanical influence such as stirring and mixing (the additives will be described in further detail below). Thereby the liquid eggs' coagulation ability is preserved for the cooking process.

The resulting increase in consistency of the liquid eggs render the handling of the obtained thickened egg mass during the further processing easier. If a process machine is used the thickened egg mass can be processed by used of vacuum without problems such as clotted filters.

Furthermore, said increase in consistency ensures that additives will remain homogenously and evenly distributes throughout the egg mass, i.e. no accumulation of additives in the upper part of the egg mass and no precipitate.

The mechanical influence such as mixing and stirring is performed by methods known in the art such as by use of a process machine, a bowl chopper, a hand blender or whipper.

During the thickening and mixing the temperature of the liquid egg mass is preferably kept below 25 °C, such as below 20 or 15 °C, more preferably below 12 °C.

In one embodiment of the present invention the thickened liquid egg mass obtained in the above described thickening step has a viscosity of at least about 0.3 Pas, such as at least about 0.4 Pas (measured at 12 °C, shear rate of 100 1/s). In another embodiment of the present invention the thickened liquid egg mass obtained in the above described thickening step has a viscosity of at least about 0.6, 0.8, 1.0, or 1.2 Pas (measured at 12 °C, shear rate of 100 1/s).

The viscosity is measured as disclosed in example 4. As described above the increased viscosity e.g. ensures an evenly distribution of additives in the egg mass. Thus, if pieces of bacon are to be added the viscosity must be increased more than if chives are to be added to the liquid egg mass. Further, if vacuum is to be used, it is an advantage to increase the viscosity in order to avoid problems with for example clotted filters.

In one embodiment, the viscosity is about 0.3-2.0 Pas, such as about 0.4-1.8 Pas (measured at 12 °C, shear rate of 100 1/s).

In one embodiment of the present invention, the thickened liquid egg mass obtained in the above described thickening step, when starting from liquid eggs consisting primarily of liquid egg white, has a viscosity of about 0.3-1.2, such as about 0.3-1.0 or about 0.4-0.6 Pas (measured at 12 °C, shear rate of 100 1/s).

In yet another embodiment of the present invention, the thickened liquid egg mass obtained in the above described thickening step, when starting from liquid eggs consisting primarily of liquid whole eggs, has a viscosity of about 0.8-1.9 Pas, such as about 1.0-1.7 or about 1.2-1.5 Pas (measured at 12 °C, shear rate of 100 1/s).

The unique mixture of additives designed specifically by the present inventors for use in the present invention is characterized by comprising a cold active thickening agent and a heat activated thickening agent.

As used herein "thickening agent" or "gelation agent" are used interchangeable and means an agent that thicken a liquid mass.

As used herein, "cold active thickening agent" means an agent that thicken a liquid mass at temperatures below about 55 °C, preferably below 30 °C.

As used herein, "heat activated thickening agent" means an agent that provides and maintain thickness and stability to a heat treated product, i.e. it has a setting temperature of above about 30 °C, preferably above 45 °C, and maintain the obtained thickness in the heat treated product when cooled.

The use of both a cold active thickening agent and a heat activated thickening agent ensures a homologous liquid egg mass during the manufacturing process as well as a stable and elastic consistency of the cooked end product.

During further processing the cooked egg based product will sustain pliability and flexibility, thus being sliceable. If the egg based product is sliced a smooth and even surface is obtained.

Accordingly, due to the addition of the unique mix of additives the gelation of the liquid egg mass is possible to control both before, during and after cooking of liquid egg mass. Further, the manufacturing process of the present invention including said mixture of a cold active thickening agents and a heat activated thickening agent and further at least one moisture retaining agent results in a juicy and elastic end product that do not release water during storage and which is sliceable.

### The additives

As described above, the manufacturing process of the present invention and the products thereof comprises addition of a mixture of additives. The mixture of additives used in the present invention comprises at least one cold active thickening agent and at least one heat activated thickening agent.

In one embodiment of the present invention the cold active thickening agent is a cold swelling starch.

The cold swelling starch is added to thicken the liquid egg mass before it is cooked, i.e. it is added to the uncooked liquid egg mass during the thickening step described above. As used herein, "cold swelling starch" is to be understood as starch that increase the consistency of a liquid product without the need of heating, i.e. at temperatures below about 55 °C, preferably below 30 °C. Examples of cold swelling starch are modified starch such as modified starch from rice or maize or preferably, modified starch from potato.

In one embodiment of the present invention the heat activated thickening agent is a sulfated polysaccharide. In a more preferred embodiment of the present application, the heat activated thickening agent is a carrageenan.

Carrageenans are a family of linear sulfated polysaccharides that are extracted from red edible seaweeds. There are three main varieties of carrageenan (kappa, iota and lambda), which differ in their degree of sulfation. In the food industry the carrageenans is grouped as hydrocolloids. Due to their gelling, thickening and stabilizing properties they are used to adjust the texture and viscosity of food products. They can improve the water-binding capacity and reduce purge at storage.

In one embodiment of the present invention carrageenan types comprising some kappa and/or iota carrageenan or any mixture thereof is preferred. These varieties gels most strongly in the presence of potassium and calcium ions, respectively.

The carrageenan may be used in a crude form (e.g. washed seaweed) or in an alkaline modified form or in the form of the conventional carrageenan extracts of commerce.

In one embodiment of the present invention a semi-refined carrageenan is preferred.

Accordingly, in one embodiment of the present invention semi-refined kappa and/or iota carrageenan or any mixture thereof is preferred is preferred to give the cooked product a stabile texture and consistency and make it manageable during slicing.

The obtained texture and consistency of the cooked product of the present invention is thermally-irreversible. Thus, the product of the process of the present invention, i.e. the egg based foodstuff, will not melt if it is re-heated e.g. is used in warm dishes or if it is fried or roasted.

Further, at least one moisture retaining agent is comprised in the mixture of additives of the present invention.

The moisture retaining agent is an agent that prevents release of liquid, i.e. prevents release of liquid during storage of the product. In one embodiment of the present invention the moisture retaining agent must have a water-binding capacity of at least 15 %. As known by the person skilled in the art, a low water binding capacity of the moisture retaining agent can be compensated by adding a higher amount of the moisture retaining agent. Accordingly, in order to obtain an end-product capable of retaining moisture and thereby retain the qualities of the food product during storage, the person skilled in the art can either add a moisture retaining agent with a high water binding capacity in a low amount, or the skilled person can add a moisture retaining agent with a low water binding capacity in a high amount.

As used herein, "water-binding capacity" is to be understood as the amount of water that can be bound, hold or absorbed per gram of sample material (g water / g dry material). The water binding capacity of the moisture retaining agent of the present invention is calculated by the AACC method 56-20.01 (AACC International Approved Methods of Analysis, 11th Ed. Method 56-20.01. Hydration Capacity of Pregelatinized Cereal Products. AACC International, St. Paul, MN, U.S.A. htttp://dx.doi.org/10.1094/AACCIntMethod-56-20.01).

Non-limiting examples of moisture retaining agents useful in the present invention are dietary fiber such as vegetable fibers. In one embodiment of the present invention the moisture retaining agent is a vegetable fiber or a mixture of vegetable fibers. In one embodiment, the vegetable fiber or mixture thereof is chosen from the group comprising fibers from citrus, potato, carrots, and bamboo. In a preferred embodiment of the present invention the moisture retaining agent is citrus fiber. Citrus fiber has a neutral smell and taste, is dispersible in both cold and hot systems, and has a very high water-binding capacity of 25 g water per 1 g fiber (according to the AACC method 56-20.01 as referred to above), i.e. a water-binding capacity of 2500 %.

According to one embodiment of the present invention, the mixture of additives added in the thickening and mixing step of the manufacturing process and thus comprised in the foodstuff manufactured by said process comprises at least one cold active thickening agent such as a cold swelling starch, at least one heat activated thickening agent such as a sulfated polysaccharide, and at least one moisture retaining agent.

### Further, the following additives might also be added:

A stabilizing agent is favorable to add to the liquid egg mass if it comprises yolk and non-egg food flavoring. Said stabilizing agent will affect a more evenly distribution of the non-egg food flavoring in the liquid egg mass before it is cooked. In one embodiment of the present invention the stabilizing agent are one or more dietary gums such as vegetable gums, e.g. guar gum, locust bean gum (LBG), and xanthan gum. According to a preferred embodiment of the present invention the stabilizing agent is xanthan gum. Xanthan gum is a cold soluble gum and is synergistic with guar and locust bean gum.

Non-egg food flavoring such as pieces of meat, dietary products, vegetables, herps and spices can also be added. In one embodiment of the present invention, at least one non-egg food flavoring is added in or after the thickening step. Non-limiting examples of such non-egg food flavoring that could be added in the preparation of a foodstuff according to the present invention includes pieces of bacon (e.g. from pigs or turkey), bacon flavor, sausage such as salami, ham, cheese (e.g. mozzarella or Swiss-style cheeses), tomato, mushroom, parsley, chives, leeks, onion, spring onions, jalapeno, chili, oregano, pepper.

It is well known in the art that the addition of non-egg food flavoring to egg over time can cause an undesirable discoloring of the egg mass, i.e. the nitrite in bacon and other meat product can cause rings of green discoloring in the egg mass surrounding the meat pieces. Surprisingly, such problems of discoloring have not been observed in the egg based foodstuff of the present invention.

Preservatives that prevents unwanted growth of certain yeasts, molds, and bacterial strains, including gas producers, spore-formers and human pathogens, all of which can also contribute to a shortened or poor shelf-life quality, can be added. Any acceptable food preservative which can be used in eggs can be added. Non-limiting examples of preservatives useful in the present invention is benzoates, lactates, salt, fermented dextrose, pH regulators, sorbic acid, salts of sorbic acids, potassium sorbate, and acids such as citric acid. Preferably, salt and cultured dextrose is used as preserving agents since they also add a favorable flavor. Fermented dextrose adds a balanced taste to the foodstuff and is produced through the natural fermentation of traditional starter cultures and with a complex and undefined composition.

In one embodiment of the present invention at least one preserving agent is added together with the other additives in the thickening step. In a preferred embodiment, the preserving agent is cultured dextrose.

In one embodiment of the present invention the cold swelling starch constitute 1 - 10 wt% of the liquid egg mass, the sulfated polysaccharides 0.1 - 7 wt%, the moisture retaining agent 0.1 - 10 wt%, and if present, the stabilizing agent 0.1 - 5 wt% of the liquid egg mass.

More preferably, the cold swelling starch constitute 0.5 - 3 wt% of the liquid egg mass, the sulfated polysaccharides 0.5 - 3.5 wt%, the moisture retaining agent 0.2 - 2.5 wt%, and if present, the stabilizing agent 0.2 - 1 wt% of the liquid egg mass.

During the manufacturing process the weight of the egg mass is not influenced, thus there are no weight differences before and after the heat treatment of the egg mass. Accordingly, when the amount of the additives given above, in percentage by weight (wt%), is both referring to the amount of the additives added in the thickening step of the liquid egg in the manufacturing process as well as referring to the amounts of additives in the cooked end-product.

After the thickening step, the thickened liquid egg mass optionally can be rested to give the starch more time to bind the water thereby ensure a matured structure and to ensure an optimal development of the flavors. Preferably, the resting period may not exceed 5 hours. A very long resting period might affect that unfavourable enzymatic activity in the liquid egg mass can occurs, e.g. the flavour additives can start undesirable chemical processes.

In one embodiment of the present invention the thickened liquid egg mass obtained in the thickening step is rested for at least 0.5 hours to max. 5 hours.

The optimal resting period for a liquid egg mass comprising both yolk and whites is at least 30 minutes, such as at least 40 or 60 minutes, whereas the maximum resting time for such a liquid egg mass is 130 minutes, such as 90 or 120 minutes. The optimal resting period for a liquid egg mass comprising primarily whites is at least 100 minutes, such as at least 110 minutes, whereas the maximum resting time for such a liquid egg mass is 320 minutes, such as 300 minutes.

In one embodiment of the present invention, the thickened and optionally rested liquid egg mass is then filled into molds, e.g. by vacuum casting or by any other method known to the skilled person.

The molds can be any container in any form in which the liquid egg mass can be cooked. Suitable molds are for example sausage skin or casings. According to one embodiment, sausage skins or castings are used having a diameter or diagonal of minimum about 40 mm, and maximum about 130 mm.

Typically, the process of thickening/gelling, mixing and filling into molds is performed in a process machine utilizing vacuum casting technology. Vacuum casting is well known for the skilled person working in the field of food manufacturing. Briefly, vacuum casting is a casting process utilizing a vacuum to draw the liquid egg mass into a mold. When such a vacuum process machine is used, the gelation and the mixing of the liquid eggs and the additives is performed in a vacuum chamber at e.g. 600 millibar, optionally rested, and then poured into the mold. The vacuum is then released and the mold removed from the chamber.

However, other process machines known to the skilled person not utilizing vacuum can be used for the thickening/gelling, mixing and filling. But with use of vacuum casting technology the manufacturing process will be speeded up and a product with less air bobbles will be obtained.

After filling the egg mass into molds, it can either be rested, eventually overnight, or it can be possessed further immediately.

The egg mass or the molds with the liquid egg mass is then heat treated. Initially, the liquid egg mass is heat treated at low temperature, preferably at approximately 30-50 °C to equalize the temperature in the liquid egg mass, thus avoiding the liquid egg mass being cooked in layers. Then the temperature is raised, preferably to 70-90 °C, such as to about 78 °C, until a core temperature of the egg mass of at least 68 °C is reached to ensure that pathogens such as *Listeria* are killed. Preferably, until a core temperature of at least 72 °C.

Alternatively, and known to the skilled person, the heat treatment can be performed at lower temperatures, but heat treated for a longer period.

As used herein, "core temperature" is the temperature measured in the center of the thickest part of the foodstuff.

In one embodiment of the present invention, the thickened liquid egg mass is heat treated to a core temperature of minimum 68 °C by initially boiling at 40 °C followed by boiling at 78 °C.

In one embodiment, the heat treatment is in an oven.

Thereby a heat treated egg based foodstuff is obtained.

The heat treated egg based foodstuff is then cooled down. In one embodiment, the heat treated egg based foodstuff is cooled to a core temperature of maximum 4 °C, e.g. by showering with cold water followed by air cooling. Eventually, the foodstuff can be cooled down to freezing, e.g. at minus 18-22 °C.

A **second aspect** of the present invention relates to an egg based foodstuff manufactured by the above described process starting from liquid egg.

A **third aspect** of the present invention relates to a foodstuff comprising at least at least 60 wt% egg, such as at least 65 wt%, 70 wt%, 75 wt%, 80 wt%, 85 wt%, 90 wt%, or 95 wt% egg.

The egg of the foodstuff of the present invention consists of the edible portions of an egg, i.e. the egg yolk, the egg white, or any combination of white and yolk in any proportions.

In one embodiment of the present application, the egg of the foodstuff consists of the edible parts of a whole egg, i.e. both egg white and egg yolk in natural proportions. In another embodiment of the present invention, the egg of the foodstuff consists of 60-99 % egg white and egg yolk in natural proportions and 1-40 % egg yolk. In yet another embodiment of the present invention, the egg of the foodstuff consists of egg white.

Further, said foodstuff comprises at least one cold active thickening agent, at least one heat activated thickening agent, and at least one moisture retaining agent. The foodstuff may also comprise at least one stabilizing agent, especially if the foodstuff comprises egg yolk.

In one embodiment, the moisture retaining agent has a water-binding capacity of at least 15 %.

The cold active thickening agent, the heat activated thickening agent, the moisture retaining agent, and the stabilizing agent is described in further details above in the paragraph "The additives".

In one embodiment, the cold active thickening agent is a cold swelling starch, such as a modified starch, such as modified starch from rice or maize or preferably, modified starch from potato.

In one embodiment, the heat activated thickening agent is a sulfated polysaccharide, such as a carrageenan, such as carrageenan types comprising some kappa and/or iota carrageenan or any mixture thereof.

In one embodiment, the moisture retaining agent is a dietary fiber, such as a vegetable fiber or a mixture of vegetable fibers chosen from the group comprising fibers from citrus, potato, carrots, and bamboo. In a preferred embodiment, the moisture retaining agent is citrus fiber.

In one embodiment, the stabilizing agent, if present, are one or more dietary gums such as vegetable gums, e.g. guar gum, locust bean gum (LBG), and xanthan gum. According to a preferred embodiment, the stabilizing agent, if present, is xanthan gum.

In one embodiment, a cold swelling starch constitute 1 - 10 wt% of the foodstuff, the sulfated polysaccharides 0.1 - 7 wt%, the dietary fiber 0.1 - 10 wt%, and if present, the dietary gum 0.1 - 5 wt% of the foodstuff.

More preferably, the cold swelling starch constitute 0.5 - 3 wt% of the foodstuff, the sulfated polysaccharides 0.5 - 3.5 wt%, the dietary fiber 0.2 - 2.5 wt%, and if present, the dietary gum 0.2 - 1 wt% of the foodstuff.

In one embodiment, the foodstuff further comprises at least non-egg food flavoring such as pieces of meat, dietary products, vegetables, and herps and spices. The non-egg food flavoring is preferably homogenously and evenly distributed throughout the foodstuff. Non-limiting examples of such non-egg food flavoring is pieces of bacon (e.g. from pigs or turkey), bacon flavor, sausage such as salami, ham, cheese (e.g. mozzarella or Swiss-style cheeses), tomato, mushroom, parsley, chives, leeks, onion, spring onions, jalapeno, chili, oregano, pepper.

In one embodiment, the foodstuff further comprises preservative. Non-limiting examples of preservatives useful in the present invention is benzoates, lactates, salt, fermented dextrose, pH regulators, sorbic acid, salts of sorbic acids, potassium sorbate, and acids such as citric acid. In a preferred embodiment, the foodstuff comprises salt and cultured dextrose as preserving agents since they also add a favorable flavor to the food product.

In one embodiment, the foodstuff has been heat treated. In one embodiment, the heat treated foodstuff is shaped such that it has a diameter or a diagonal of minimum about 40 mm, and maximum about 130 mm.

The foodstuff of the present invention including the egg based product manufactured as disclosed in the first aspect, is very stable, non-porous and can for example being reheated without problems. The foodstuff is juicy and without fines. It has a stable and elastic consistency, thus, can easily be manually cut with a knife or industrially sliced into cold cuts. Due to the consistency optimal for slicing, it is possible to slice the foodstuff into smooth and even surfaced slices with a thickness of between about 0.07-1.7 mm or into about 50 mm thickness, each slice preferably with an area of between about 10-15 cm².

The sliced egg foodstuff can be packed and stored in the packaging and all the way to the e.g. breakfast table, packed lunch without releasing water.

Packaging well known to the skilled person and typically used for packaging of sliced cheese or sliced meat can be used for the purpose of packaging slices of the foodstuff according to the present invention in order to provide a ready to use egg product e.g. for the consumers.

The foodstuff according to the present invention has not been pickle preserved.

Having generally described this invention, a further understanding can be obtained by reference to certain specific examples, which are provided herein for purposes of illustration only, and are not intended to be limiting unless otherwise specified.

### Examples

### Example 1: Preparation of egg based foodstuff flavored with bacon and pepper

The liquid egg used as starting material is obtained from pasteurized liquid whole eggs with a solid content of 21 wt% that is adjusting to a solid content of 23.3 wt% by addition of pasteurized liquid egg yolk with a solid content of 41 wt%. The added liquid egg yolk has a salt content of 2.5 %.

The starting temperature in the liquid eggs is about 4 °C.

The obtained liquid eggs are then thickened and flavored by adding the following mixture of additives and flavors:

**Table 1: Additives and flavors added to the liquid eggs**

| **Ingredients** | **Ingredients (wt%)** | **Ingredients amount (kg)** |
|---|---|---|
| liquid whole egg | 70.4 | 422.5 |
| liquid egg yolk, 2.5 wt% salt | 8.8 | 52.8 |
| Cold swelling starch (Cold swell **) | 1.9 | 11.6 |
| Carrageenan (Meatline 1765*) | 2.1 | 12.6 |
| Citrus fiber | 0.7 | 4 |
| Xanthan gum | 0.4 | 2.3 |
| Salt | 0.7 | 4 |
| Fermented dextrose (Ferm 730s***) | 0.9 | 5.3 |
| Bacon flavor | 0.1 | 0.6 |
| Black pepper | 0.05 | 0.3 |

| | | |
|---|---|---|
| *GRINDSTED Meatline 1765, manufactured by Danisco **Cold Swell 5771, manufactured by KMC *** Ferm 730s, manufactured by Danisco | | |

The liquid eggs and the additives are mixed for 4 to 5 minutes by use of a KS PROCESS AUTOMATB22-600 (Karl Schnell KS) continuously under vacuum (600 millibar). To ensure homogeneous mixing and gelation, all knives are used with full circulation.

During the mixing, the liquid eggs with the additives thickens to a viscosity of about 1.2-1.5 Pas (measured at 12 °C, shear rate of 100 1/s), as measured by the method described in example 4.

Then 83.8 kg minced bacon (14.0 wt%) and 1 kg parsley (0.17 wt%) is added and mixed evenly (at 600 millibar). When the egg mass has achieved a homogeneous mixture, it is pumped out of the machine through grinder plate, 8 mm, to a VEMAG carts.

Due to the energy generated during the mixing, the temperature of the liquid egg mass has now increased to about 12 °C.

The egg mass is rested for 1-2 hours.

After the resting, the egg mass is poured into a VEMAG HP10 and under vacuum filled in sausage skin (900 mm Walsroot Ktec 90). The sausage skins are sealed with a clip.

The sausage skin comprising the thickened egg mass mixture is heat treated at 40 °C for 20 minutes in a cooking trolley, and then at 78 °C for 3 hours until a core temperature of 72 °C is reached.

Immediately after the cooking the egg sausages are showered with running 4 - 5 ° C cold water for 40 minutes, and thereafter air cooled to core temperature of 2 to 4 ° C.

### Example 2: Preparation of egg based foodstuff consisting primarily of egg whites

The liquid eggs used as starting material consist of pasteurized liquid egg whites with a starting temperature of about 4 °C, which is thickened and flavored by adding the following mixture of additives and flavors:

**Table 2: Additives and flavors added to the liquid eggs**

| **Ingredients** | **Ingredients (wt%)** | **Ingredients amount (kg)** |
|---|---|---|
| Liquid egg white | 92.5 | 554.8 |
| Cold swelling starch (Cold swell**) | 1.9 | 11.6 |
| Carrageenan (Meatline 1765*) | 2.2 | 13.1 |
| Citrus fiber | 1.4 | 8.3 |
| Salt | 1.0 | 6 |
| Fermented dextrose (Ferm 730s***) | 0.9 | 5.6 |

The liquid egg whites and the additives are mixed by use of a KS PROCESS AUTOMATB22-600 (Karl Schnell KS). To avoid that the egg white foams, vacuum (600 millibars) is used 3 x 60 seconds during the mixing. To ensure homogeneous mixing and gelation, all knives are used with full circulation. Between the 2nd and 3rd use of vacuum, 0.6 kilo (0.1 wt%) chives are added.

During the mixing, the liquid eggs with the additives thickens to a viscosity of about 0.4-0.5 Pas (measured at 12 °C, shear rate of 100 1/s), as measured by the method described in example 4.

When the egg mass has achieved a homogeneous mixture, it is pumped out of the machine through grinder plate, 8 mm, to a VEMAG carts.

Due to the energy generated during the mixing, the temperature of the liquid egg mass has now increased to about 12 °C.

The egg mass is rested for 3-5 hours.

After the resting, the egg mass is poured into a VEMAG HP10 and under vacuum filled in sausage skin (900 mm Walsroot Ktec 90). The sausage skins are sealed with a clip.

The sausage skin comprising the thickened egg mass mixture is heat treated at 40 °C for 20 minutes in a cooking trolley, and then at 78 °C for 3 hours until a core temperature of 72 °C is reached.

Immediately after the cooking the egg sausages are showered with running 4 - 5 ° C cold water for 40 minutes, and thereafter air cooled to core temperature of 2 to 4 ° C.

### Example 3: Slicing

After the heat treatment the egg product can be stored for until about 4 weeks at max 4°C.

The heat treated egg product is sliced by use of an industrial slicer, Weber 804, to cold cuts. Initially, the sausages skin is removed. Then the egg product is loaded into the slicer and sliced with thickness of 1.7 mm.

The resulting cold cuts of the egg product appear like other known cold cuts of for example ham. The cold cuts of the egg product are elastics and provide a nice mouthfeel.

After the slicing the cold cuts are immediately packed in flexible packaging with laminated barrier film PET/EVHE and PAO/EHY with a thickness 65-110 µ and APET/PE/EVE 150/880 µ, and with 40%CO2/60% N2 packaging gas.

The packed cold cuts have a shelf life of about 40 days.

The sliced and packed product has undergone sensory test focusing on organoleptic properties. When packed the cold cuts have a stable quality and the release of water is minimal (compared to what is seen when other egg products such as scrambled egg is standing over time). The taste and color do not chance during storage, and no unpleasant odor arise.

### Example 4: Measuring the viscosity at controlled temperature and shear rate conditions

Initially, six variant of liquid egg masses is prepared. Three consisting primarily of liquid egg whites (mass A, B, C), and three consisting primarily of liquid whole eggs (mass D, E, F). The six liquid egg masses are prepared and thickened as disclosed in example 1 and 2. The amounts of additives added in the six liquid egg masses are shown in the following tables 3-8.

**Table 3: Liquid egg white, mass A**

| **Ingredients** | **Ingredients (wt%)** | **Ingredients amount (kg)** |
|---|---|---|
| Liquid egg white | 92.42 | 0.462 |
| Cold swelling starch (Cold swell**) | 2.09 | 0.0105 |
| Carrageenan (Meatline 1765*) | 2.20 | 0.011 |
| Citrus fiber | 1.40 | 0.007 |
| Salt | 1.00 | 0.005 |
| Fermented dextrose (Ferm 730s***) | 0.90 | 0.0045 |

**Table 4: Liquid egg white, mass B**

| The amounts (wt% and kg) of liquid egg white, citrus fiber, salt, and Ferm 730s are the same as for liquid egg mass A, see table 3. | | |
|---|---|---|
| Meatline 1765 and citrus fiber are added in the following amounts: | | |
| **Ingredients** | **Ingredients (wt%)** | **Ingredients amount (kg)** |
| Cold swelling starch (Cold swell**) | 2.31 | 0.0115 |
| Carrageenan (Meatline 1765*) | 1.98 | 0.010 |

**Table 5: Liquid egg white, mass C**

| The amounts (wt% and kg) of liquid egg white, citrus fiber, salt, and Ferm 730s are the same as for liquid egg mass A, see table 3. | | |
|---|---|---|
| Meatline 1765 and citrus fiber are added in the following amounts: | | |
| **Ingredients** | **Ingredients (wt%)** | **Ingredients amount (kg)** |
| Cold swelling starch (Cold swell**) | 1.89 | 0.0095 |
| Carrageenan (Meatline 1765*) | 2.42 | 0.012 |

**Table 6: Liquid whole egg, mass D**

| **Ingredients** | **Ingredients (wt%)** | **Ingredients amount (kg)** |
|---|---|---|
| Liquid whole egg | 82.0 | 0.410 |
| Liquid egg yolk, 2.5 wt% salt | 10.3 | 0.0515 |
| Cold swelling starch (Cold swell**) | 2.3 | 0.0115 |
| Carrageenan (Meatline 1765*) | 2.3 | 0.0115 |
| Citrus fiber | 0.8 | 0.004 |
| Xanthan gum | 0.5 | 0.0025 |
| Salt | 0.8 | 0.004 |
| Fermented dextrose (Ferm 730s***) | 1.0 | 0.005 |

**Table 7: Liquid whole egg, mass E**

| The amounts (wt% and kg) of liquid whole egg, liquid egg yolk, citrus fiber, xanthan gum, salt, and Ferm 730s are the same as for liquid egg mass D, see table 6. | | |
|---|---|---|
| Cold swell and Meatline 1765 are added in the following amounts: | | |
| **Ingredients** | **Ingredients (wt%)** | **Ingredients amount (kg)** |
| Cold swelling starch (Cold swell**) | 2.53 | 0.0125 |
| Carrageenan (Meatline 1765*) | 2.07 | 0.010 |

**Table 8: Liquid whole egg, mass F**

| The amounts (wt% and kg) of liquid whole egg, liquid egg yolk, citrus fiber, xanthan gum, salt, and Ferm 730s are the same as for liquid egg mass D, see table 6. | | |
|---|---|---|
| Cold swell and Meatline 1765 are added in the following amounts: | | |
| **Ingredients** | **Ingredients (wt%)** | **Ingredients amount (kg)** |
| Cold swelling starch (Cold swell**) | 2.07 | 0.010 |
| Carrageenan (Meatline 1765*) | 2.53 | 0.0125 |

An MCR301 rheometer (Anton Paar, Austria) was used in the measurements. The instrument was equipped with a plate/plate measuring system, PP50/P2, and a Peltier for temperature control.

The measurements were made at 12 °C and with a gap of 1 mm.

For more information on rheological methods, see Steffe, J.F., Rheological methods in food process engineering (Second edition). 1996, East Lancing: Freeman Press ISBN: 0-9632036-1-4.

The viscosity measurements were done in rotation with shear rates increasing from 2 1/s to 100 1/s and then decreasing from 100 1/s to 2 1/s.

Tukey multiple comparison of means with 95% family-wise confidence level was used to find differences in viscosity between the liquid egg masses.

Numerical values of viscosity at the shear rate of 100 1/s are shown in Table 9 where also mean values for each liquid egg mass is shown together with a group letter (from the Tukey-analysis) indicating significant different groups.

**Table 9: Viscosity at a shear rate of 100 1/s**

| Groups with different group letters are significantly different (Tukey). | | | |
|---|---|---|---|
| **Egg mass** | **Viscosity at 100 1/s (Pas)** | **Mean group viscosity** | **Group** |
| mass A₁ | 0.469 | 0.534 | B |
| mass A₂ | 0.589 | | |
| mass A₃ | 0.553 | | |
| mass A₄ | 0.525 | | |
| mass B₁ | 0.486 | 0.4755 | B |
| mass B₂ | 0.465 | | |
| mass C₁ | 0.426 | 0.426 | B |
| | | | |
| mass D₁ | 1.45 | 1.4050 | A |
| mass D₂ | 1.36 | | |
| mass E₁ | 1.32 | 1.2900 | A |
| mass E₁ | 1.26 | | |
| mass F₁ | 1.43 | 1.3850 | A |
| mass F₂ | 1.34 | | |

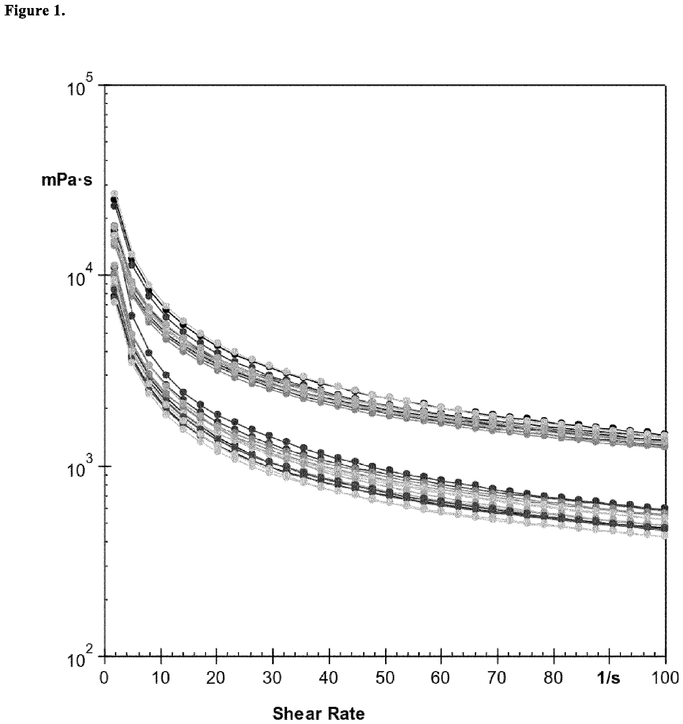

All the liquid egg masses were pseudo plastic (shear thinning), as seen in Figure 1. The viscosity of the masses primarily comprising liquid whole eggs was generally higher than the masses primarily comprising liquid egg whites as seen in Figure 1 and in table 9.

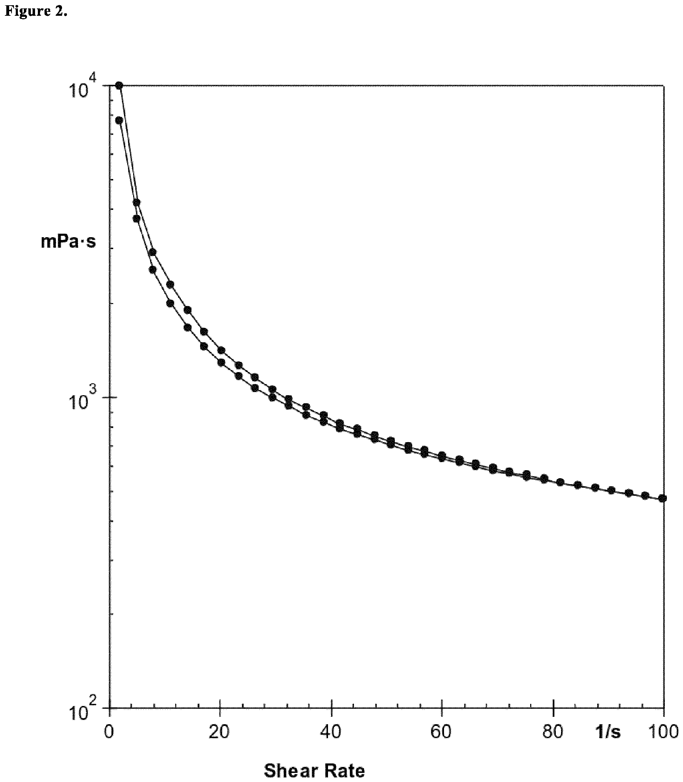

The liquid egg masses exhibited thixotropic behavior, as shown in Figure 2 for sample "mass A1".

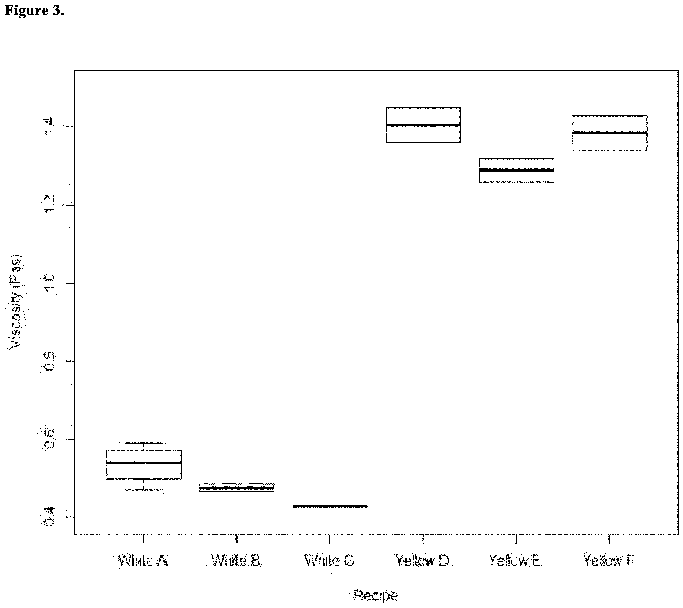

A box plot showing the viscosity for the different liquid egg masses is shown in Figure 3. Differences in viscosity between masses primarily comprising liquid egg whites were not significant. The same was the case for the masses primarily comprising liquid whole eggs.

Further, amplitude sweep measurements were made on one of the masses primarily comprising liquid whole eggs and on one of the masses primarily comprising liquid egg whites, to find the viscoelastic properties. The angular frequency was kept constant at 10 rad/s and the strain was increased from 0.01 % to 100%.

Macros in the Anton Paar software package RheoPlus was used to determine the limit of the linear viscoelastic region for these oscillatory data.

The masses tested are viscoelastic solids at low strain, and the liquid egg white mass is stiffer than the liquid whole egg mass. The upper limit of the linear viscoelastic region (LVR), determined from the point where the elastic modulus (called the storage modulus that describes the solid behavior of the sample) is reduced by 3 %, defines the limited strain before damage and the strength. The results are given in table 10:

**Table 10: Values of strain and shear stress at the upper limit of the viscoelastic region**

| **Egg mass** | **Strain (%) upper limit LVR** | **Shear stress (Pa)¹** |
|---|---|---|
| liquid whole eggs mass | 1.659 | 1.885 |
| liquid egg white mass | 0.1 | 0.1663 |

| | | |
|---|---|---|
| ¹ at upper limit LVR | | |

## Claims

1. A process for manufacturing an egg based foodstuff comprising the following steps:
a. providing liquid eggs; and
b. thickening the liquid eggs by adding at least:
i. at least one cold active thickening agent; and
ii. at least one heat activated thickening agent,
thereby obtaining a thickened liquid egg mass; and
c. optionally, resting the thickened liquid egg mass obtained in step b); and
d. optionally, filling the thickened liquid egg mass of step b) or c) in suitable molds; and
e. heat treating the liquid egg mass of step b), c) or d) to a core temperature of minimum 68 °C, thereby obtaining a heat treated egg based foodstuff; and
f. optionally, cooling the heat treated egg based foodstuff; and
g. optionally, slicing the heat treated egg based foodstuff of step f).

2. A process according to claim 1, wherein in step b), further at least one moisture retaining agent is added, and optionally, at least one stabilizing agent.

3. A process according to anyone of claims 1-2, wherein the cold active thickening agent is a cold swelling starch.

4. A process according to anyone of claims 1-3, wherein the heat activated thickening agent is a sulfated polysaccharide.

5. A process according to anyone of claims 1-4, wherein the moisture retaining agent is a dietary fiber.

6. A process according to anyone of the claims 1 -5, wherein at least one non-egg food flavoring is added in or after step b).

7. An egg based foodstuff manufactured by the process of claims 1-6.

8. A foodstuff comprising at least 60 wt% egg and at least the following additives:
i. at least one cold active thickening agent; and
ii. at least one heat activated thickening agent; and
iii. at least one moisture retaining agent; and
iv. optionally, at least one stabilizing agent.

9. A foodstuff according to claim 8, wherein the cold active thickening agent is a cold swelling starch.

10. A foodstuff according to anyone of claims 8-9, wherein the heat activated thickening agent is a sulfated polysaccharide.

11. A foodstuff according to claim 10, wherein the sulfated polysaccharide is a carrageenan.

12. A foodstuff according to anyone of claims 8-11, wherein the moisture retaining agent is a dietary fiber.

13. A foodstuff according to anyone of claims 8-12, wherein the stabilizing agent, if present, is a dietary gum.

14. A foodstuff according to anyone of the claims 8-13, wherein the amounts of the additives given by percentage by weight of the foodstuff are
a. approx. 1 - 10 wt% of the cold active thickening agent; and
b. approx. 0.1 - 7 wt% of the heat activated thickening agent; and
c. approx. 0.1 - 10 wt% of the moisture retaining agent; and
d. if present, approx. 0.1 - 5 wt% of the stabilizing agent.

15. A foodstuff according to anyone of the claims 8-14, wherein the foodstuff further comprises at least one non-egg food flavoring.
